# EUROPEAN PATENT APPLICATION

(11) **EP 3 862 472 A1**
(43) Date of publication of application: **11.08.2021**
(21) Application number: 21156129.5
(22) Date of filing: 09.02.2021
(51) Int. Cl.: D02G 3/44, C09K 11/00, D01D 5/42

(54) **FIBER WITH LIGHT-REFLECTIVE AND LUMINESCENT FUNCTIONS AND TEXTILE WITH SUCH FIBER**

(30) Priority: 10.02.2020 TW 109104067
(71) Applicant: Chance Line Industrial Co., Ltd., Changhua County (TW)
(72) Inventor: YAO, Ming Hsien, Changhua County (TW)
(74) Representative: Lang, Christian

(57) **Abstract**

The invention relates to a fiber and a textile woven with the fiber, the fiber has two surfaces, a light-reflective layer and a luminescent layer respectively, and thus has light-reflective and luminescent functions. The functional fiber can be woven into a textile, or used as a sewing thread or an embroidery thread, so that apparels with the textile, the sewing thread or the embroidery thread have light-reflective and luminescent properties, making the apparels fashionable and capable of providing safety.

## Description

### BACKGROUND OF THE INVENTION

### Field of Invention

The invention relates to a fiber with both light-reflective and luminescent functions.

### Related Art

Clothes made to have light-reflective or luminescent effect can promote safety, especially to improve the safety of night activities. At present, clothes are made to have light-reflective or luminescent function by sewing light-reflective strips or luminescent strips on the clothes to meet the requirements of reflecting light or luminescence, such as light-reflective clothing worn by police, traffic controllers and cleaning staff.

The aforementioned light-reflective clothing is fixed with foreign objects (such as light-reflective strips), its light-reflective effect comes from the foreign objects (light-reflective strips), and the clothing itself does not have light-reflective function.

In addition, fiber with both light-reflective and luminescent effects is a product that the textile industry has never thought of and cannot imagine. Such fiber with a length of more than 3,000 or 4,000 meters must be used in order to produce textiles (such as knitted, plain woven or circular woven fabrics), and the current technology is incapable of producing fibers with such a length and also with luminescent or light-reflective function.

### SUMMARY OF THE INVENTION

The problem of the current technology being incapable of producing fibers with light-reflective and luminescent effects lies in the difficulty of producing fibers with both light-reflective material and luminescent material.

A main object of the invention is to provide a fiber with light-reflective and luminescent functions, so that the fiber has light-reflective and luminescent effects.

Another object of the invention is to use the aforementioned functional fiber as a sewing thread or an embroidery thread, so that the embroidery thread or the sewing thread on apparels provides light-reflective and luminescent functions of the apparels.

Yet another object of the invention is to provide a textile, and cause the textile itself to have both light-reflective and luminescent functions instead of relying on foreign objects.

The fiber with light-reflective and luminescent functions provided by the invention is a strip body with at least two surfaces, one of the surfaces is a light-reflective surface and the other surface is a luminescent surface.

Preferably, a cross-section of the fiber is rectangular with a first pair of surfaces and a second pair of surfaces, the two pairs of surfaces are respectively located in top and bottom directions, and two side directions of the fiber, the first pair of surfaces are respectively a light-reflective surface and a luminescent surface that are two opposite surfaces.

The invention provides the aforementioned fiber and the textile woven with the aforementioned fiber. The fiber has both light-reflective and luminescent functions; therefore, the textile itself has the light-reflective effect and luminescent function, so that apparels can be fashionable and capable of providing safety.

The apparels or textiles can be made primarily of the fiber of the invention, or be made of blends or mixtures of the fiber of the invention and one or more other types of fibers, and the apparels or textiles have light-reflective and luminescent functions accordingly.

The microfiber of the invention can be used as a sewing thread or an embroidery thread of apparels, and the embroidery thread or the sewing thread becomes a light-reflective and luminescent part of the apparels to make the apparels fashionable and capable of providing safety.

### BRIEF DESCRIPTION OF THE DRAWINGS

The objects, features, and achieved efficacies of the invention can be understood from the description and drawings of the following preferred embodiments, in which:
FIG. 1 is a perspective schematic view of a fiber of the invention;
FIG. 2 is a cross-sectional schematic view of the fiber of the invention, wherein the fiber has two functional surfaces;
FIG. 3 is a cross-sectional view of the fiber of a first preferred embodiment of the invention;
FIG. 4 is a cross-sectional view of the fiber of a second preferred embodiment of the invention;
FIG. 5 is a cross-sectional view of the fiber of a third preferred embodiment of the invention;
FIG. 6 is a cross-sectional view of the fiber of a fourth preferred embodiment of the invention;
FIG. 7 is a cross-sectional view of the fiber of a fifth preferred embodiment of the invention;
FIG. 8 is a cross-sectional view of the fiber of a sixth preferred embodiment of the invention;
FIG. 9 is a cross-sectional view of the fiber of a seventh preferred embodiment of the invention;
FIG. 10 is a cross-sectional view of the fiber of an eighth preferred embodiment of the invention;
FIG. 11 is a cross-sectional view of a membrane material used to make the fiber of FIG. 3;
FIGS. 12 and 13 are schematic diagrams of a manufacturing process of the fiber of the invention; and
FIG. 14 is a schematic diagram of a textile made with the fiber of the invention.

### DETAILED DESCRIPTION OF THE INVENTION

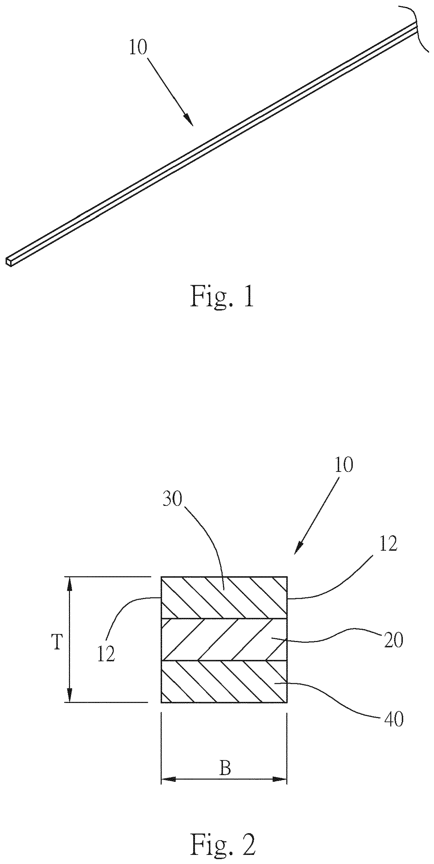

The invention provides a fiber with functional surfaces to make a fiber 10 with a considerable length shown in FIG. 1. A width of the fiber is between 0.05mm and 1.5mm, including a width between 0.05mm and 0.5mm of microfibers, which can be within a thickness of the diameter of hair, that is, within a range of 0.05mm to 0.09mm. The fiber of the invention has light-reflective and luminescent functions. Textiles made of such fiber (especially microfiber) can be made into clothing for the human body to wear to improve the safety of human body activities. The fiber of the invention can also be used as an embroidery thread or a sewing thread of fabrics or textiles, when being used as an embroidery thread or a sewing thread, a denier number of the fiber 10 is hundreds of deniers or thousands of deniers (for example, more than one thousand deniers).

Please refer to FIG. 2 for a cross-sectional schematic view of the fiber 10 of the invention. The fiber 10 has an intermediate layer 20, a light-reflective layer 30 and a luminescent layer 40. The light-reflective layer 30 and the luminescent layer 40 are respectively located on two opposite surfaces, such as a top surface and a bottom surface of the intermediate layer 20. The light-reflective layer 30 and the luminescent layer 40 constitute two functional surfaces of the fiber 10. The functional surface described in this specification refers to a surface with functionality, and functionality refers to: light-reflective function and luminescent function, the light-reflective layer 30 is capable of reflecting light to make one of the opposite surfaces of the fiber 10 to have light-reflective effect. The luminescent layer 40 is capable of emitting luminescence to make the other opposite surface of the fiber 10 to have luminescent effect.

A cross-sectional shape of the fiber 10 is rectangular and has two pairs of surfaces, respectively located in top and bottom directions and two side directions of the fiber 10, wherein the first pair of surfaces described in this embodiment are located in the top and bottom directions of the fiber 10, and the second pair of surfaces are located in the two side directions of the fiber 10. The cross-sectional shape of the fiber 10 has a width B and a thickness T. As shown in FIG. 2, the thickness T is formed between a top surface and a bottom surface of the fiber 10, and the width B is formed between two side surfaces of the fiber 10. The light-reflective layer 30 and the luminescent layer 40 constitute the first pair of surfaces and are located in the top and bottom directions of the fiber 10, and the light-reflective layer 30 and the luminescent layer 40 form the top surface and the bottom surface of the fiber 10, which are opposite surfaces; the second pair of surfaces are located in the two side directions of the fiber 10, which are left and right side surfaces of the fiber 10, and are cut surfaces 12 of the fiber 10, the two surfaces 12 are opposite surfaces. The thickness T of the fiber 10 is between 0.1 mm and 0.35 mm in this preferred embodiment, preferably within a range of 0.15 to 0.22 mm. The width B of the fiber 10 is between 0.05 mm and 0.5 mm. The fiber 10 of the invention can be cut into microfibers with a width between 0.05 mm and 0.25 mm, for example, between 0.05 mm and 0.12 mm.

Hereinafter, several preferred embodiments of the fiber 10 of the invention will be described. In this specification, the reference numeral 10 is used generally for the fiber, and the fibers of a specific structure are represented by reference numerals 10a to 10h. Similarly, the reference numerals 30 and 40 are used collectively for the light-reflective layer and the luminescent layer, respectively, and the light-reflective layer and the luminescent layer of a specific structure are represented by reference numerals 30a to 30g and 40a, 40b respectively.

The fiber 10 of the invention is made by cutting membrane material. The inventor conceives and intends to produce fibers with a length of more than 3,000 meters or 4,000 meters and with both light-reflective and luminescent functions, which can only be achieved by cutting membrane material, and faggoting is incapable of producing fibers with both light-reflective and luminescent effects.

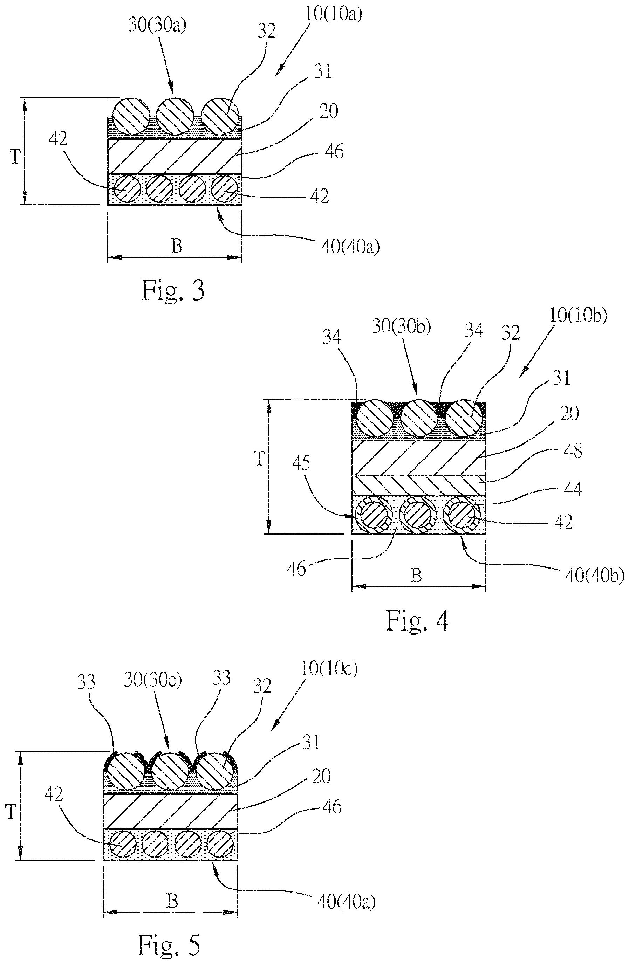

Please refer to FIG. 3 for a cross-sectional view of the fiber 10a of a first preferred embodiment of the invention. The intermediate layer 20 is made of a macromolecular material of plastic or rubber, which can be an elastic material or an inelastic material. If it is an elastic material, TPU (thermoplastic polyurethane elastomeric rubber), PU (polyurethane), TPE (thermoplastic elastomer), TPR (thermoplastic rubber), hot melt adhesive, silicone rubber (silica gel) or nylon can be selected as the material, but the material is not limited thereto; if it is an inelastic material, PET (polyethylene terephthalate), rigid PVC (polyvinyl chloride) or OPP (oriented polypropylene) can be selected as the material, but the material is not limited thereto.

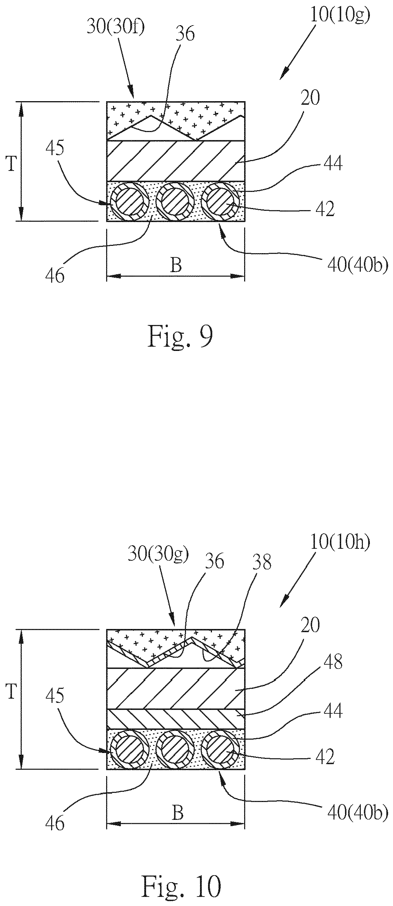

The light-reflective layer 30 has a plurality of light-reflecting members with optical functions, and the light-reflecting members can be light reflectors shown in FIGS. 3 to 8 or prisms shown in FIGS. 9 and 10. The light-reflecting member shown in FIGS. 3 to 8 is a plurality of light-reflective transparent beads, such as glass microbeads 32, which are disposed on one surface (the top surface) of the intermediate layer 20 by means of coating or transfer using a release film, FIGS. 3 to 8 use a layer of the glass microbeads 32 as an example, but it is not limited thereto, the light-reflective layer 30 can have the glass microbeads 32 arranged in two layers or more than two layers. The glass microbeads 32 make the light-reflective layer 30 have a light-reflective effect. The light-reflective layer 30a in FIG. 3 shows (but it is not limited thereto) that the glass microbeads 32 are provided with an adhesive layer (glue layer) 31 to be disposed on a surface of the intermediate layer 20, and at least half of a volume of the glass microbeads 32 is embedded in the adhesive layer 31, and outer ends of the glass microbeads 32 are exposed outside the adhesive layer 31. The adhesive layer 31 is bonded to inner surfaces of the glass microbeads 32, and outer surfaces (for example, peripheral surfaces in a range of a 180-degree angle facing toward the outside) of the outer ends of the glass microbeads 32 are exposed from the adhesive layer 31.

In the light-reflective layer 30b shown in FIG. 4, gaps between the glass microbeads 32 are disposed with metal fillers 34 by coating or vacuum-plating, such as metal materials of aluminum, silver, chromium, tin, nickel and platinum, preferably aluminum and silver. The fillers 34 make the light-reflective layer 30b have high light reflectivity and good light reflectance. Therefore, the light-reflective layer 30b of FIG. 4 has a higher light reflectance. The fillers 34 do not completely cover the outer surfaces (the peripheral surfaces in a range of a 180-degree angle facing toward the outside) of the glass microbeads 32, that is, at least 30% of the outer surfaces of the glass microbeads 32 are exposed and not covered by the fillers 34, and the outer ends of the glass microbeads 32 and the fillers 34 are exposed from the light-reflective layer 30b.

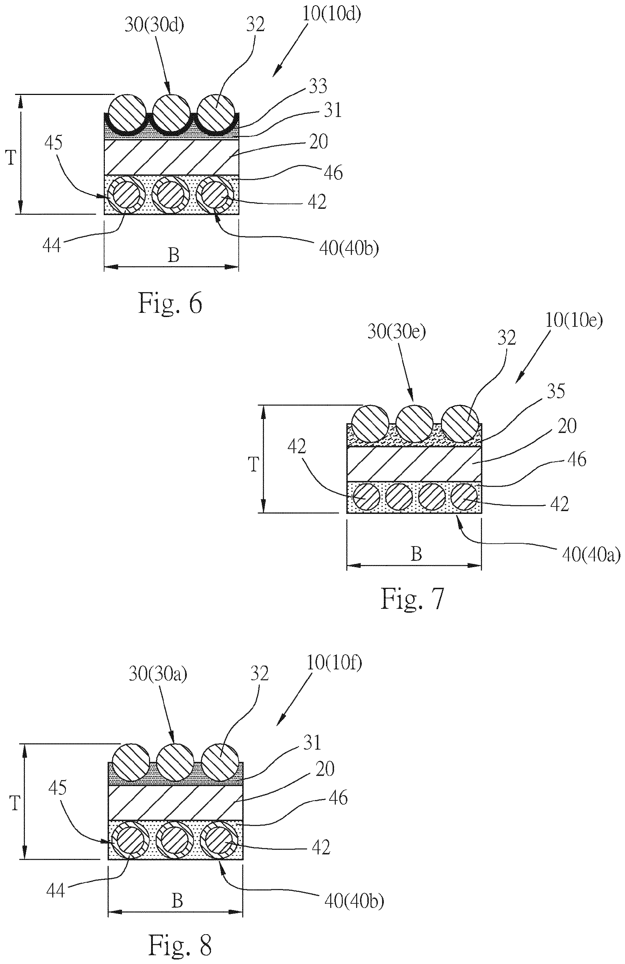

The light-reflective layer 30 of the invention is capable of changing colors. Please refer to the fiber 10c in FIG. 5, the light-reflective layer 30c is provided with a color layer 33 covering the outer surfaces of the glass microbeads 32. The color layer 33 uses dyes (colorants) to produce colors, which can be mixed dyes or dye-infused resins, and have colors, and can be made to have different colors. The color layer 33 is disposed in the gaps between the glass microbeads 32, and the outer surfaces of the glass microbeads 32 remain exposed. Although the color layer 33 of this embodiment covers the outer surfaces (the peripheral surfaces in a range of a 180 degree angle facing toward the outside) of the glass microbeads 32, the color layer 33 does not completely cover the outer surfaces of the glass microbeads 32, and at least 30% of the outer surfaces-at a center of the outer surfaces-of the glass microbeads 32 are still exposed to maintain the light-reflective effect of the glass microbeads 32. Thereby, an appearance of the light-reflective layer 30 has the color presented by the color layer 33. When the color layer 33 is made to have a different color, the light-reflective layer 30 will have a different color. The fiber 10d shown in FIG. 6 has the light-reflective layer 30d provided with the color layer 33 covering the inner surfaces (the surfaces facing the intermediate layer 20) of the glass microbeads 32. The outer surfaces of the glass microbeads 32 remain exposed and are not covered by the color layer 33. The light-reflective layers 30c and 30d have colors through the color layer 33. The color layer 33 can be disposed on the light-reflective layer 30 by means of transfer, coating or chemical coating.

Please refer to FIG. 7, the fiber 10e further includes: a mixed layer 35 of color and fillers, which includes: resins formed by mixing dyes with metal materials (such as aluminum, silver, chromium, tin, nickel and platinum, preferably aluminum and silver), the resins are coated on the light-reflective layer 30e and do not completely cover the outer surfaces of the glass microbeads 32, so that at least 30% of the outer surfaces of the glass microbeads 32 are exposed. With the mixed layer 35 of color and fillers, the light-reflective layer 30e has good light reflectivity, and its appearance has the color presented by the dyes.

The light-reflective layer 30a of the fiber 10f disclosed in FIG. 8 is the same as the light-reflective layer 30a of FIG. 3.

In the fiber 10g disclosed in FIG. 9, prisms (light-reflecting members) 36 are formed on a back side (the surface combined with the intermediate layer 20) of the light-reflective layer 30f. The light-reflective layer 30f is a macromolecular thin film, which can be thermoplastic or thermosetting polymers, such as PVC (polyvinyl chloride), PU (polyurethane resin), TPU (thermoplastic polyurethane resin), PP (polypropylene), PE (polyethylene), PET (polyethylene terephthalate fiber) and PEVA (polyethylene vinyl acetate). The back side of the light-reflective layer 30f is made into a concave-convex shape, so a plurality of the protruding microprisms 36 are formed. The microprisms 36 can be, but are not limited to: polygonal cone-shaped protruding configurations, such as protruding configurations of triangular pyramid, quadrangular pyramid (like a pyramid shape) and pentagonal pyramid. When light enters the light-reflective layer 30f, the prisms 36 are capable of reflecting the light, so that the light-reflective layer 30f has a light-reflective effect.

In the fiber 10h shown in FIG. 10, the light-reflective layer 30g is further coated with a metal reflective layer 38 on a surface of each of the prisms (light-reflecting members) 36 by coating or vacuum-plating. A selected metal material can be aluminum, chromium, tin, nickel, platinum or silver, and the reflective layer 38 of this embodiment is aluminum. The reflective layer 38 forms a reflective interface capable of increasing a light reflectance of the light-reflective layer 30g.

The light-reflective layer 30f of FIG. 9 and the light-reflective layer 30g of FIG. 10 can be added with dyes (colorants) during manufacturing to make the light-reflective layer 30f and the light-reflective layer 30g have colors.

Please refer to FIG. 3, the luminescent layer 40a of the fiber 10a has a plurality of luminescent particles 42 so that the luminescent layer 40 is capable of emitting luminescence, and thus people can see the luminescence in the luminescent layer at night or when there is no light source or only has low light source. In this embodiment, the luminescent layer 40a is shaped and formed by mixing a liquid mixture of the luminescent particles 42 and a high polymer resin 46. The resin 46 used in this preferred embodiment is a polyurethane (PU) resin, which is transparent and colorless. The luminescent particles 42 are finished products of rare-earth elements mixed with alkaline earth aluminate or silicate, and are microparticles with a size of 5 µm to 200 µm capable of emitting light (luminescence) by themselves. The luminescent layers 40a of FIGS. 5 and 7 are the same as the luminescent layer 40a of FIG. 3 and have the luminescent particles 42.

Please refer to the luminescent layer 40b of the fiber 10b in FIG. 4, a surface of each of the luminescent particles 42 is further enclosed with a transparent resin to form a microcapsule structure (that is, a micro enclosure layer enclosing the micro luminescent particle). The transparent resin forms an enclosure layer 44 to enclose each of the luminescent particles 42 to completely block the luminescent particles 42 from the outside, so that the luminescent particles 42 will not contact with the outside, thereby preventing the luminescent particles 42 from chemically reacting with water or other substances, for example, preventing the luminescent particles 42 from becoming a strong base after contacting with water. The enclosure layer 44 and the enclosed luminescent particle 42 form a microcapsule luminescent particle 45. It should be explained that since the luminescent particles 42 are tiny, there can be a plurality of the luminescent particles 42 enclosed by the enclosure layer 44 during manufacture, so each of the microcapsule luminescent particles 45 can include one or more than one luminescent particles 42. The transparent resin used to form the enclosure layer 44 of the invention is a resin capable of resisting potassium chloride, so as to prevent the luminescent particles 42 from contacting with water to release strong alkali. The transparent resin is colorless, and therefore, the enclosure layer 44 is transparent and colorless. It should be explained that the microcapsule luminescent particles 45 are capable of making the luminescent layer 40 have better luminescent effect and stability. The luminescent layers 40b of FIGS. 6 and 8 to 10 are the same as the luminescent layer 40b of FIG. 4 and have the microcapsule luminescent particles 45.

Please refer to FIG. 4, the invention can further provide a hue layer (i.e. a color layer having a color) 48 on a back side (that is, the surface where the luminescent layer 40b combines with the intermediate layer 20) of the luminescent layer 40b. The hue layer (color layer) 48 is made of a high polymer material, such as plastic or rubber thin film, and dyes (colorants) are used to produce a desired color, such as blue, red, pink, green, yellow, etc., or is provided with more than two colors. The hue layer (color layer) 48 can be applied to the fiber 10 of all the preferred embodiments of the invention to make the luminescent layer 40 have color.

If the luminescent layer 40 needs to be made with a color, there is another manufacturing method of mixing dyes (colorants) with the resin 46 to dye the resin 46 in order to make the colored luminescent layer 40. In this way, an appearance of the luminescent layer 40 can be provided with the color exhibited by the dyes during the day or at places with sufficient light.

When sunlight or other light sources illuminate the luminescent layer 40, the luminescent particles 42 are capable of absorbing the light source and storing energy. In the dark or at places with low light sources, the luminescent particles 42 are capable of emitting luminescence.

In the daytime or under normal light, the luminescent layer 40 is provided with the color presented by the dyes of the hue layer (color layer) 48 or the luminescent layer 40.

At night, in the absence of light or in darkness, the luminescent particles 42 of the luminescent layer 40 emit luminescence, and the luminescence is the color of light of the luminescent particles 42 themselves. For example, when the luminescent layer 40 is made of the light yellow luminescent particles 42, the luminescent layer 40 emits a light yellow luminescence; the dyes in the hue layer (color layer) 48 or the luminescent layer 40 do not emit light, so the luminescence of the luminescent layer 40 will not be affected by the hue layer 48 or the dyes at night or at places with insufficient light sources. In the invention, the hue layer 48 is disposed on back sides of the luminescent particles 42 and does not block the luminescent particles 42, so the luminescence emitted by the luminescent particles 42 will not be affected or reduced.

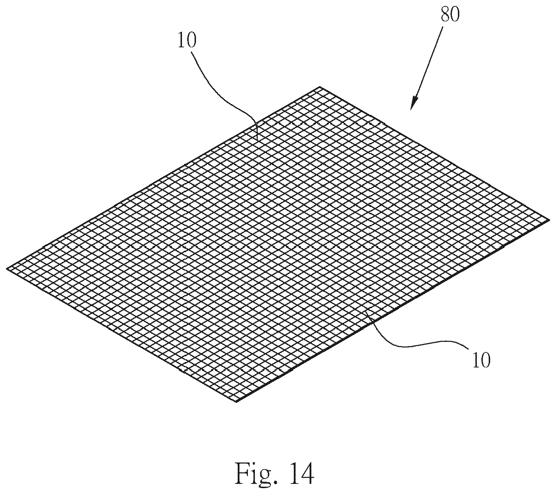

In the invention, the functional fiber 10 is made by cutting membrane material, and the fiber 10 is woven into textiles, as shown in FIG. 14, for making apparels or personal accessories such as clothes, shoes, bags (handbags, backpacks), sacks (carried sacks, shoulder sacks), belts (leather belts, webbings) with light-reflective and luminescent effects. The fiber 10 of the invention can also be used as an embroidery thread (such as embroidery thread for embroidering patterns on clothes) or a sewing thread for clothes.

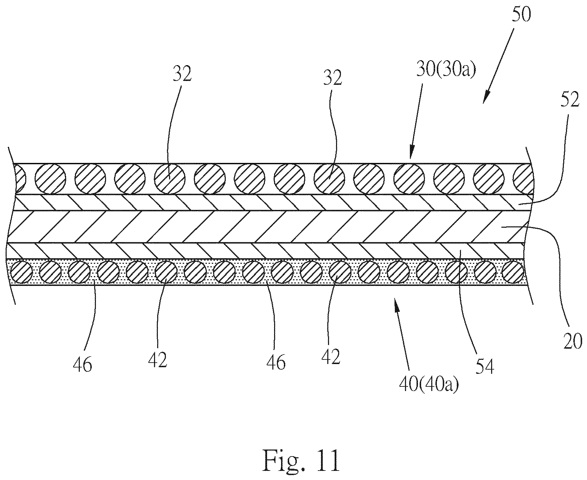

Please refer to FIG. 11, which shows a membrane material 50 used to make the fiber 10a of FIG. 3. The membrane material 50 has the intermediate layer 20, the light-reflective layer 30 and the luminescent layer 40. The light-reflective layer 30 is bonded with one surface, such as the top surface of the intermediate layer 20 through a bonding layer 52; and the luminescent layer 40 is bonded with the other surface, such as the bottom surface of the intermediate layer 20 through a bonding layer 54. The bonding layers 52, 54 can be glue, hot melt glue or other adhesive materials. The luminescent layer 40 can be shaped (made into a membranous form) and then bonded with the intermediate layer 20 through the bonding layer 54, the luminescent layer 40 can also be in liquid form to be bonded with the intermediate layer 20 by coating on one surface of the intermediate layer 20 without bonding through the bonding layer 54. Similarly, the light-reflective layer 30 can also be bonded with the intermediate layer 20 by coating.

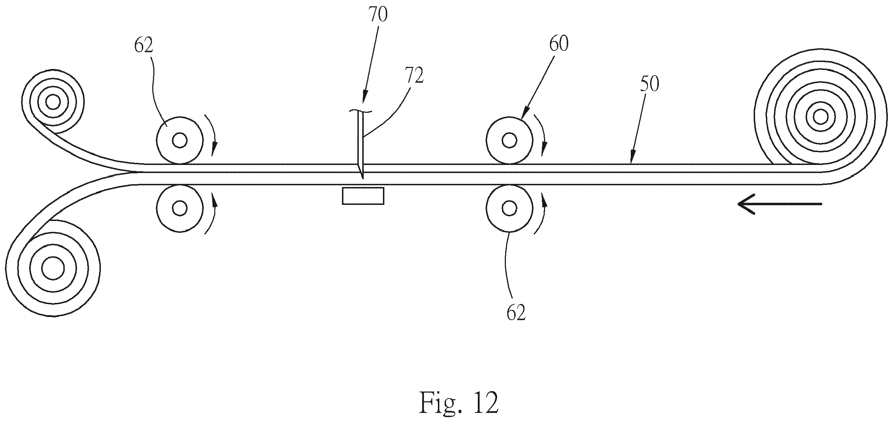

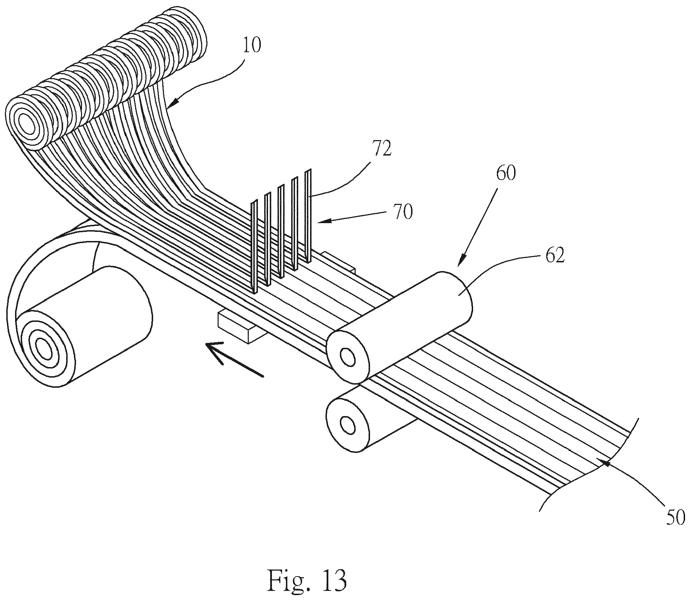

Please refer to FIGS. 12 and 13, the membrane material 50 has a length of more than 3,000 meters, and the membrane material 50 is conveyed to a cutting device 70 by rollers 62 of a conveying device 60 for cutting, so as to be cut into the fibers 10. How the cutter 72 of the cutting device 70 cuts the membrane material 50 is not a main subject matter of the invention, so it will not be described herein.

A membrane material used to make the fibers 10 in FIGS. 4 to 10 can be understood from the membrane material 50 in FIG. 11, that is, a cross-sectional structure of the fiber 10 is the same as a cross-sectional structure of the membrane material 50.

In addition to having the two functional (light-reflective and luminescent) surfaces, the fiber 10 of the invention can be made to have various colors to facilitate applications. The light-reflective layer 30 and the luminescent layer 40 can be made to have a same color, so that the two functional surfaces of the fiber 10 have the same color.

The functional fiber of the invention can be made into various textiles by various weaving techniques. For example, a textile 80 shown in FIG. 14 is made of the functional fiber 10 of the invention. Textiles woven with the fiber 10 can be made into apparels, clothes and shoes for the human body to wear or bags (handbags, backpacks). The apparels that can be made of the textiles include a variety of clothes such as general clothes, swimwear, sportswear, leggings, T-shirts, ribbons, etc.

When the functional fiber of the invention is used to make apparels such as clothing, bags, shoes or fabrics, the apparel itself directly has light-reflective and luminescent functions. The invention integrates safety factors directly into fashion, and when people wear fashionable apparels made of the functional fiber of the invention, their safety is protected.

The fiber of the invention can also be used as an embroidery thread or a sewing thread. When the fiber is used as an embroidery thread, a pattern is embroidered on apparels or fabrics, and the pattern becomes a light-reflective and luminescent part of the apparels or fabrics. When the fiber is used as a sewing thread, the sewing thread can be used to produce light-reflective and luminescent effects at the seams of the apparels. The aforementioned apparels or textiles can be made primarily of the fiber of the invention, or be made of blends or mixtures of the fiber of the invention and one or more other types of fibers, and the apparels or textiles thus have light-reflective and luminescent functions.

The functional fiber provided by the invention is a breakthrough for the problem that the prior art is incapable of producing fibers with both light-reflective and luminescent functions, and the functional fiber can be used to make apparels to improve the safety of movement.

It is to be understood that the above description is only preferred embodiments of the present invention and is not used to limit the present invention, and changes in accordance with the concepts of the present invention may be made without departing from the spirit of the present invention, for example, the equivalent effects produced by various transformations, variations, modifications and applications made to the configurations or arrangements shall still fall within the scope covered by the appended claims of the present invention.

## Claims

1. A fiber with light-reflective and luminescent functions, the fiber being a strip body with at least two surfaces, one of the surfaces being a light-reflective surface capable of reflecting light, and the other surface being a luminescent surface capable of emitting luminescence.

2. The fiber as claimed in claim 1, wherein a cross-section of the fiber being rectangular with a first pair of surfaces and a second pair of surfaces respectively located in top and bottom directions and two side directions of the fiber, the first pair of surfaces being respectively a light-reflective surface and a luminescent surface that being two opposite surfaces.

3. The fiber as claimed in claim 1 or 2, wherein the light-reflective surface of the fiber is formed by a light-reflective layer, the light-reflective layer has a plurality of light-reflecting members; and the luminescent surface is formed by a luminescent layer with a luminescent material.

4. The fiber as claimed in claim 2, wherein the fiber has a width and a thickness, the light-reflective surface and the luminescent surface are located in the top and bottom directions of the fiber; two side surfaces of the fiber are cut surfaces and are located in the two side directions of the fiber.

5. The fiber as claimed in claim 4, wherein a width is formed between the two side surfaces of the fiber, and the width of the fiber is between 0.05 mm and 0.5 mm.

6. The fiber as claimed in claim 5, wherein a thickness is formed between a top surface and a bottom surface of the fiber, and the thickness of the fiber is between 0.1 mm and 0.35 mm

7. The fiber as claimed in claim 2, wherein a cross-sectional structure of the fiber has an intermediate layer, a light-reflective layer and a luminescent layer respectively located on two surfaces of the intermediate layer to form the first pair of surfaces.

8. The fiber as claimed in claim 3, further comprising light-reflective fillers provided on the light-reflective layer and located in gaps between the light-reflecting members, and the light-reflecting members and the light-reflective fillers being exposed from the light-reflective layer.

9. The fiber as claimed in claim 3, wherein the light-reflecting members of the light-reflective layer are a plurality of light-reflective beads, and the light-reflective beads are exposed from the light-reflective layer; further comprising a color layer provided on the light-reflective layer, and covering surfaces of the light-reflective beads, and all or part of outer surfaces of the light-reflective beads being not covered by the color layer.

10. The fiber as claimed in claim 9, wherein the color layer covers part of the outer surfaces of the light-reflective beads.

11. The fiber as claimed in claim 3, wherein a mixed layer of color and fillers is provided on the light-reflective layer and does not completely cover the outer surfaces of the light-reflecting members, and the fillers are light-reflective metal materials.

12. The fiber as claimed in claim 3, wherein the light-reflective layer has a back side located in the fiber; the light-reflecting members are a plurality of prisms formed on the back side of the light-reflective layer.

13. The fiber as claimed in claim 12, further comprising a reflective layer provided on surfaces of the prisms.

14. The fiber as claimed in claim 3, wherein the luminescent material is a plurality of luminescent particles; the luminescent layer further includes a plurality of transparent enclosure layers respectively enclosing the luminescent particle to block the luminescent particle from the outside; and each of the enclosure layers and the luminescent particle enclosed by the enclosure layer form a microcapsule structure.

15. The fiber as claimed in claim 14, wherein the luminescent layer has a back side located in the fiber; and a hue layer with a color is provided on the back side of the luminescent layer.

16. The fiber as claimed in claim 14, wherein the luminescent layer is a mixture of a resin and the luminescent particles, and the resin is colored by dyes.

17. The fiber as claimed in claim 1 or 2, the fiber being used as a sewing thread or an embroidery thread.

18. A textile woven and formed with fibers that comprise the fiber as claimed in any one of claims 1 to 16, and the textile is provided with light-reflective and luminescent properties.
